# FASCICULE DE BREVET EUROPEEN

(11) **EP 0 389 349 B1**
(45) Date de publication et mention de la délivrance du brevet: **12.01.1994**
(21) Numéro de dépôt: 90400738.2
(22) Date de dépôt: 19.03.1990
(51) Int. Cl.: H04J 3/06

(54) **Procédé et équipement d'extrémité pour établir des communications via des canaux sélectionnés dans une liaison multiplex**
Verfahren und Endeinrichtung zur Herstellung von Verbindungen über Kanäle, die in einer Multiplexverbindung ausgewählt sind
Method and terminal for establishing communications via channels selected in a multiplex link

(30) Priorité: 20.03.1989 FR 8903611
(43) Date de publication de la demande: 26.09.1990
(73) Titulaire: FRANCE TELECOM, 75015 Paris (FR)
(72) Inventeur: Boltz, Bernard, F-05500 Antibes (FR)
(74) Mandataire: Cabinet Martinet & Lapoux

(56) Documents cités:
- EP-A- 0 173 274
- DE-A- 3 333 379
- GB-A- 2 092 413
- US-A- 4 577 312
- PATENT ABSTRACTS OF JAPAN, vol. 4, no. 44 (E-5)[526], 5 mai 1980, page 55 E 5 & JP-A-55 14 742

## Description

La présente invention concerne la synchronisation de canaux banalisés indépendants d'un réseau de télécommunications afin d'obtenir une liaison de débit élevé. Plus particulièrement, l'invention concerne des perfectionnements apportés à un procédé et des équipements d'extrémité connus destinés à de telles liaisons de débit élevé.

La demande de brevet français FR-A-2634082 déposée le 5 juillet 1988 par le demandeur décrit un procédé et des équipements d'extrémité selon lesquels des bits ou trames de synchronisation sont émis en continu pendant toute la durée d'une liaison. La transmission de trames de synchronisation en continu présente l'inconvénient de prélever une part de débit dans chacun des canaux banalisés intervenant dans la liaison. Par conséquent, il est nécessaire pour établir une liaison de débit de données strictement égale à n.D, n étant un entier supérieur à 1 et D un débit de base des canaux banalisés, de disposer d'un nombre de canaux supérieur à n, typiquement d'un nombre de canaux égal à n+1. De plus, dans ces équipements d'extrémité le traitement des trames de synchronisation à la reception sont effectués en parallèle par n circuits de synchronisation inclus respectivement dans n circuits de réception de canal intervenant dans la liaison de débit élevé.

Le brevet américain US-A-4 577 312 décrit un procédé de synchronisation de canaux à faibles débits pour établir une liaison de débit élevé. Un centre de service du réseau rattaché à un centre de transit du réseau commande un télébouclage de deux extrémités entre lesquelles doit être établie la liaison. Il transmet des séquences de synchronisation vers les deux terminaux et calcule des retards de transmission entre canaux relativement aux deux extrémités par rapport audit centre. Ces retards entre canaux sont additionnés pour déduire des retards relatifs entre canaux entre les deux terminaux. La synchronisation des canaux est réalisée simultanément pour tous les canaux. Cette synchronisation parallèle simultanée des canaux, avantageuse en terme de délai de synchronisation, reste concevable dans le cadre de l'architecture complexe d'un centre informatique rattaché à un centre de transit du réseau de télécommunication.

Dans le cas où l'équipement de synchronisation est directement rattaché au terminal de l'abonné, une diminution sensible pourrait être apportée au coût de revient de telles architectures en remplaçant ces traitements parallèle par un traitement séquentiel des trames de synchronisation. Un seul circuit de synchronisation suffit dans ce cas et il est partagé entre tous les circuits de réception de canal.

La présente invention vise à fournir un procédé et des équipements d'extrémité perfectionnés ne présentant pas les inconvénients mentionnés ci-dessus.

A cette fin, le procédé selon l'invention pour établir une liaison de télécommunications de débit élevé entre une extrémité de transmission et une extrémité de réception par association d'un nombre prédéterminé n de canaux indépendants d'un réseau de télécommunications à commutation temporelle synchrone est tel que défini dans la revendication 1

D'autres caractéristiques du procédé sont énoncées dans les revendications 2 et 3.

Un équipement d'extrémité selon l'invention pour la mise en oeuvre du procédé ci-dessus est tel que défini dans la revendication 4,

D'autres caractéristiques de l'équipement d'extrémité sont énoncées dans les revendications dépendantes 5 et 6.

L'invention sera mieux comprise à la lecture de la description suivante du procédé perfectionné et de plusieurs réalisations préférées de l'équipement d'extrémité perfectionné selon l'invention en référence aux dessins annexés correspondants dans lesquels :
- la Fig. 1 est un bloc-diagramme montrant un exemple d'interconnexion entre un équipement d'extrémité selon l'invention associé à une installation d'abonné et un autocommutateur local ;
- la Fig. 2 montre la structure d'une trame de type MIC ;
- la Fig. 3 est un bloc-diagramme de l'équipement d'extrémité ;
- la Fig. 4 montre une multitrame incluant des trames de synchronisation produites par l'équipement d'extrémité et transmises dans des canaux du réseau de télécommunications pendant une phase d'établissement et synchronisation de la communication ;
- la Fig. 5 est un bloc-diagramme détaillé d'un circuit de démultiplexage inclus dans l'équipement d'extrémité ;
- la Fig. 6 est un bloc-diagramme détaillé d'un circuit de réception multicanaux inclus dans l'équipement d'extrémité ;
- la Fig. 7 est un bloc-diagramme schématique d'une mémoire tampon incluse dans le circuit de réception multicanaux ;
- la Fig. 8 est un diagramme montrant différentes phases d'une communication multicanaux et notamment la phase d'établissement et synchronisation de la communication; et
- la Fig. 9 est un diagramme d'une sous-phase de synchronisation.

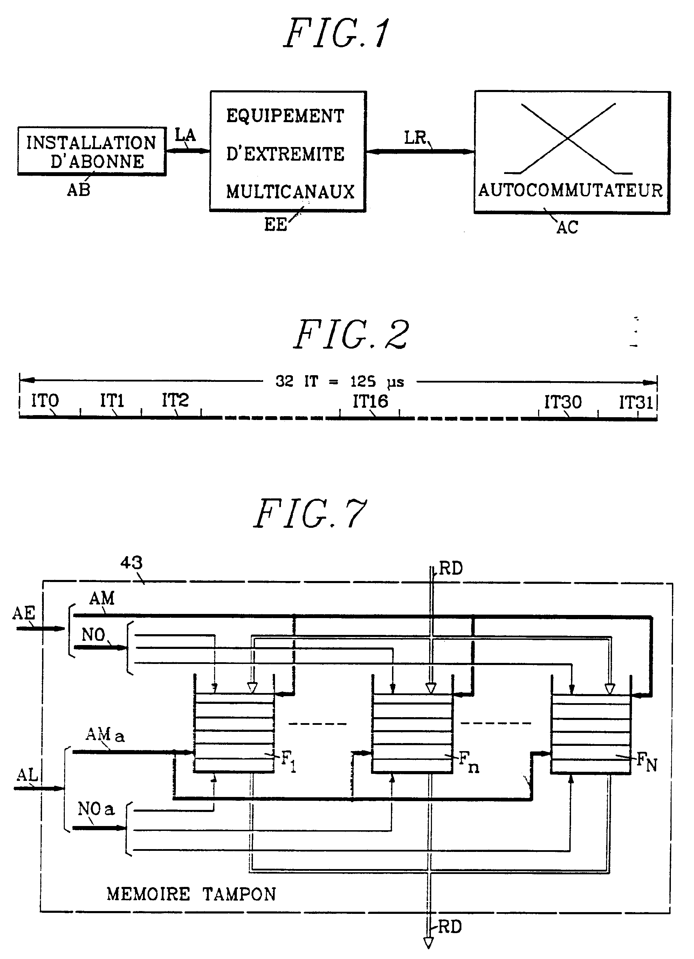

En référence à la Fig. 1, un équipement d'extrémité multicanaux EE selon l'invention est raccordé à une installation d'abonné AB et à un autocommutateur local AC d'un réseau de télécommunications de type RNIS à communication temporelle synchrone.

L'installation d'abonné AB est reliée à l'équipement EE à travers une ligne bidirectionnelle LA. La ligne LA est prévue pour écouler dans les deux sens de communication un canal de débit variable égal à n.D. où D est un débit de base par exemple égal à 64 kbit/s dans le cas où le réseau de télécommunications est de type MIC, et n est un entier variant entre 1 et un nombre maximum N, N étant typiquement compris entre 2 et 30.

Le canal de débit variable est par exemple supporté par des voies multiplex à division du temps MIC à 2,048 Mbit/s. L'équipement EE est relié à l'autocommutateur AC à travers une liaison multiplex bidirectionnelle LR. Selon un sens de communication sortant, une première voie multiplex à division du temps MIC à 2,048 Mbit/s de la liaison LR convoie au maximum N canaux de données sortants DT₁ à DT_{N}. Selon un sens de communication entrant une seconde voie multiplex à division du temps MIC à 2,048 Mbit/s de la liaison LR convoie au maximum N canaux de données entrants DR₁ à DR_{N}.

L'équipement EE peut aussi être relié à l'autocommutateur AC à travers plusieurs liaisons bidirectionnelles ayant par exemple chacune un débit utile égal à 144 kbit/s.

Comme montré à la Fig. 2, une voie multiplex à division du temps MIC à 2,048 Mbit/s comprend 30 canaux de données assignés respectivement à des intervalles temporels IT1 à IT15 et IT17 à IT31, un canal de synchronisation correspondant à un intervalle temporel IT0 convoyant des mots de verrouillage de la trame MIC, et un canal de signalisation correspondant à un intervalle temporel IT16. N canaux de données d'une voie multiplex MX sont respectivement attribués aux N canaux de données DT₁ à DT_{N} ou DR₁ à DR_{N}. L'intervalle temporel IT16 convoie des informations de signalisation correspondant aux N canaux de données.

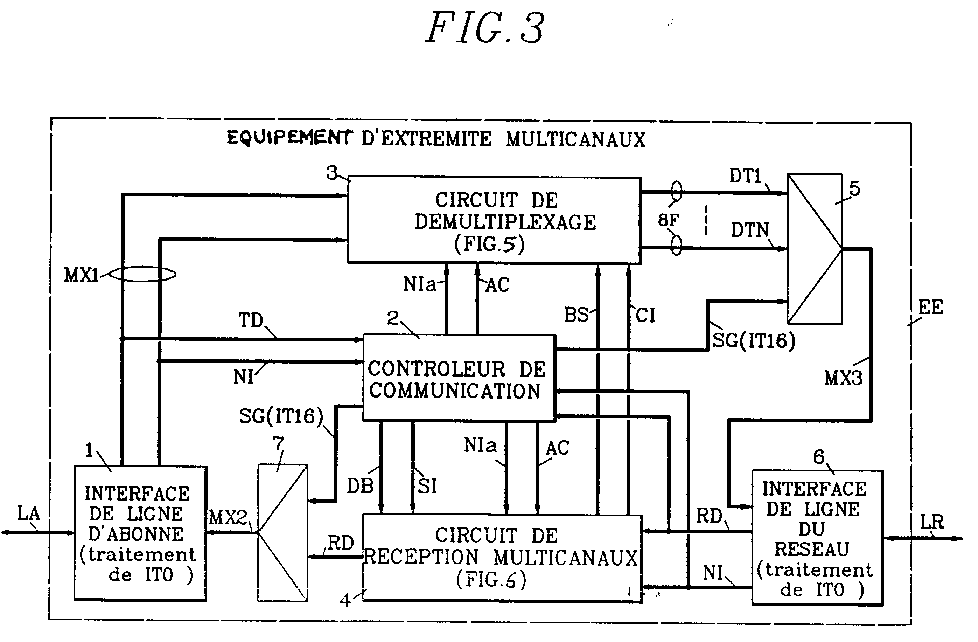

En référence à la Fig.3, un équipement d'extrémité multicanaux EE selon l'invention comprend essentiellement une interface de ligne d'abonné 1, un contrôleur de communication 2, un circuit de démultiplexage 3, et un circuit de réception multicanaux 4, des multiplexeurs 5 et 7 par exemple du type MIC à 2,048 Mbit/s et une interface de ligne du réseau 6.

L'interface de ligne d'abonné 1 est connectée à la ligne LA.

Selon le sens de communication sortant, les informations transmises par l'installation d'abonné AB sont délivrées au contrôleur de communication 2 et au circuit de démultiplexage 3 par l'interface 1 sous la forme de mots de données TD multiplexés dans une trame MIC, MX1. Parallèlement à chaque mot TD transmis, des numéros d'intervalle temporel multiplexés NI sont également fournis par l'interface 1. Les numéros NI varient de 0 à 31 et indiquent les canaux de mots TD transmis par l'interface 1.

Selon le sens de communication entrant, l'interface 1 reçoit des mots multiplexés dans une autre trame MIC, MX2, fournie par le circuit de multiplexage 7. Dans cette trame MX2, des informations de signalisation SG(IT16) sont introduites par le circuit de multiplexage 7. Les informations SG(IT16) sont fournies par le contrôleur 2 et sont incluses dans l'intervalle temporel IT16 de la trame et sont destinées à l'installation d'abonné.

Le contrôleur de communication 2 est par exemple un circuit à microprocesseur. Le contrôleur gère la signalisation de commande d'appel des communications et commande le fonctionnement de l'équipement d'extrémité EE pendant les différentes phases et sous-phases de communication, en produisant des mots et bits de signalisation, des mots de commande interne et des signaux de rythme destinés aux différents circuits de l'équipement EE.

Le circuit de démultiplexage 3 comprend un circuit de transmission de bits de synchronisation 32 qui a pour fonction de transmettre des bits de synchronisation de trame et de multitrame BS pour les inclure dans les mots TD à la place de bits de données, pendant une phase d'établissement et synchronisation de la communication. Un démultiplexeur d'aiguillage 320 est prévu dans le circuit 32 afin de transmettre les bits de synchronisation BS dans les canaux DT₁ à DT_{N} sous la commande d'un signal ES qui indique à l'état "1" la phase d'établissement et synchronisation de la communication.

Le contrôleur de communication 2 et le circuit de réception multicanaux 4 sont tous deux connectés à l'interface de ligne du réseau 6. L'interface 6 transmet au circuit de réception 4 et au contrôleur 2 les mots de données RD multiplexés de la trame MIC entrante, et des numéros d'intervalles temporels multiplexés NI.

Le contrôleur de communication 2 fournit au circuit de réception 4 les numéros d'intervalles temporels NIa affectés à différents circuits de canal 41₁ à 41_{N} inclus dans le circuit 4, selon un ordre de synchronisation affecté aux canaux. Le contrôleur 2 transmet également au circuit 4 des adresses de sélection de canal AC pour adresser des circuits de canal inclus dans le circuit de réception 4 afin d'attribuer les numéros d'intervalles temporels NIa à ces circuits. De plus, en fin de phase d'établissement et synchronisation de la communication, le contrôleur 2 transmet un mot de débit DB et une impulsion SI pour initialiser un compteur de lecture inclus dans le circuit 4. Le circuit de réception 4 délivre au circuit de démultiplexage 3 à travers un unique fil, les bits de synchronisation BS correspondant successivement aux canaux de données DT₁ à DT_{N} ainsi qu'une impulsion de commande de commutation CI pour commuter la synchronisation sur un circuit de canal suivant. Cette impulsion CI est également fournie au contrôleur de communication 2 qui peut ainsi suivre l'évolution de la synchronisation des canaux.

Les N canaux de données DT₁ à DT_{N} sont traités dans le réseau de télécommunications comme N canaux banalisés indépendants de débit de base égal à 64 kbit/s. Les N canaux de données DT₁ à DT_{N} empruntent différents trajets dans le réseau de télécommunications et sont reçus à la réception avec des retards variables importants. Il est donc nécessaire de prévoir à la réception une resynchronisation des canaux entre eux. Pendant la phase d'établissement et synchronisation de la communication, les bits de synchronisation de trame et multitrame BS ont pour fonction d'introduire des marquages temporels en définissant des trames et multitrames synchrones dans les canaux DT₁ à DT_{N}.

Le tramage et multitramage des canaux DT₁ à DT_{N} est réalisé par exemple conformément à la recommandation H221 du CCITT (Comité Consultatif International Télégraphique et Téléphonique) définissant une structure de trame et multitrame numérique pour des services multimédias.

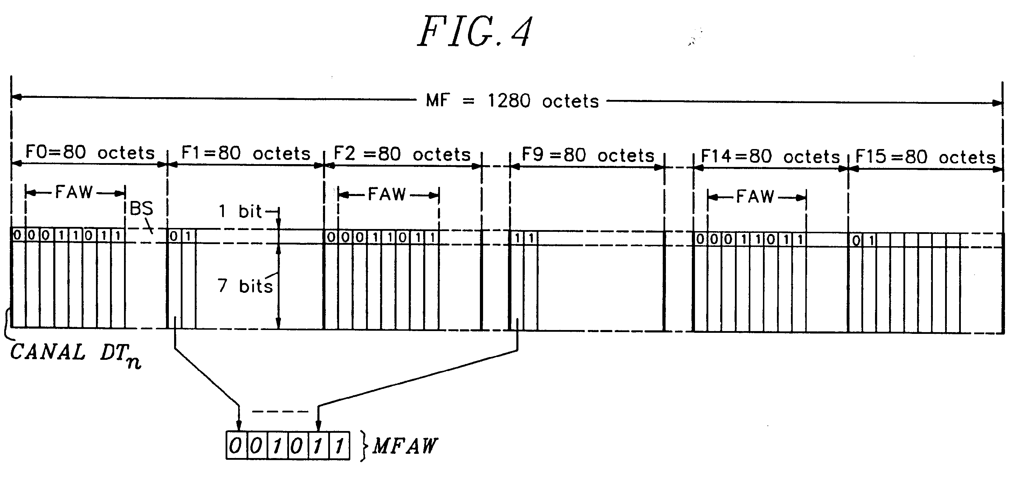

Comme montré à la Fig. 4 pour le canal de données DTₙ, une multitrame MF est composée de 16 trames successives F0 à F15. Chacune des trames F0 à F15 est constituée de 80 octets successifs du canal DTₙ. Chaque octet de trame comprend 7 bits non utilisés et un huitième bit de poids faible qui constitue un bit de synchronisation BS.

Un mot de verrouillage de trame FAW="0011011" est compris dans chacune des trames paires F0, F2, ... F14 de la multitrame MF. Le mot de verrouillage de trame FAW est porté par les bits BS des deuxième à huitième octets des trames paires F0, F2... F14.

Un mot de verrouillage de multitrame MFAW="001011" est compris dans chaque multitrame MF. Le mot de verrouillage de multitrame MFAW est porté par les bits BS des premiers octets respectivement des six premières trames impaires F1, F3... F11.

De plus, afin de compléter le marquage temporel du canal DTₙ, le bit BS du premier octet de chacune des trames paires F0, F2... F14 et des deux dernières trames impaires F13 et F15 est positionné à l'état "0", et le bit BS du deuxième octet de chacune des trames impaires F1, F3... F15 est positionné à l'état "1".

Ce sont les multitrames MF qui servent de support à la synchronisation de façon à pouvoir absorber des variations de temps de transit allant jusqu'à 80 ms, voire plus si les multitrames sont numérotées. De plus, les bits BS peuvent convoyer également des informations de code détecteur d'erreur afin de mesurer la qualité de service lors de la phase d'établissement et synchronisation de la communication.

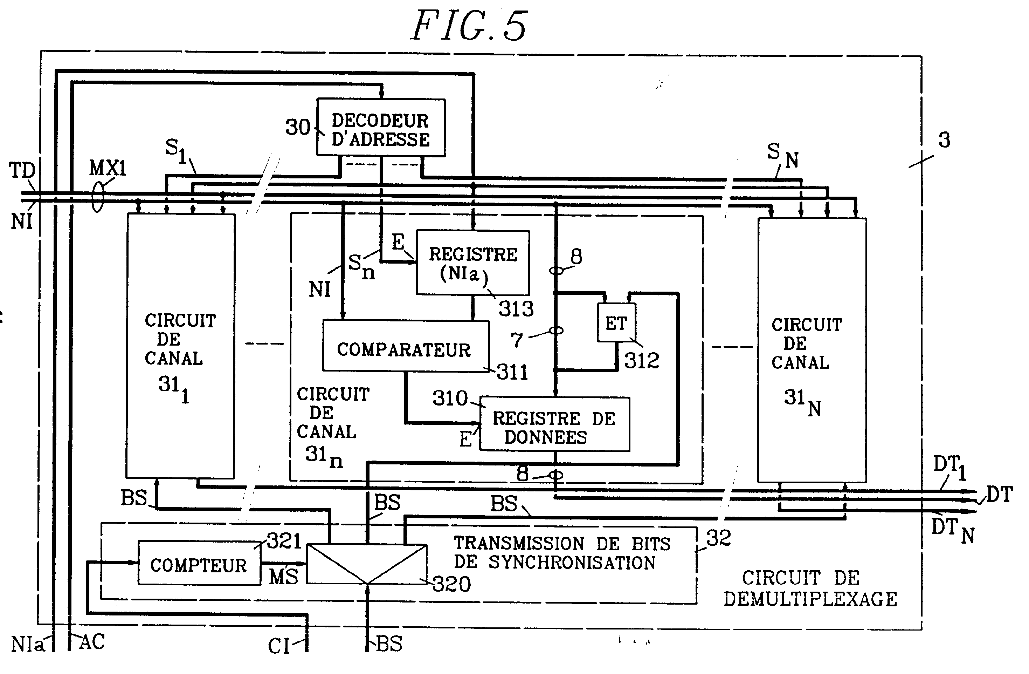

En référence à la Fig. 5, le circuit de démultiplexage 3 comprend un décodeur d'adresse 30, N circuits de canal 31₁ à 31_{N} et un circuit de transmission de bits de synchronisation 32.

Le décodeur d'adresse 30 comprend un port d'entrée recevant les adresses de sélection de circuit de canal AC délivrées par le contrôleur de communication 2, et N sorties S₁ à S_{N} connectées respectivement aux N circuits de canal 31₁ à 31_{N}.

Le circuit de canal 31ₙ est montré en détail à la Fig. 5 et comprend un registre de numéro d'intervalle temporel 313, un comparateur de mots 311, un registre de données 310 et une porte logique ET, 312. Le registre 313 a pour fonction de mémoriser le numéro d'intervalle temporel NIa de la voie multiplex temporel MIC, MX1, numéro qui est affecté au circuit de canal 31ₙ par le contrôleur de communication 2. Un port d'entrée de données du registre 310 est relié à un bus interne du circuit de démultiplexage 3 convoyant les numéros NIa transmis par le contrôleur 2. Une entrée de commande d'écriture E du registre 313 est reliée à la sortie Sₙ du décodeur d'adresse 30. Lorsque le numéro NIa et une adresse correspondante AC=n sont transmis par le contrôleur 2, la sortie Sₙ du décodeur 30 délivre une impulsion à l'état actif "1" à l'entrée E du registre 313 et le numéro NIa est chargé consécutivement dans le registre 313 du circuit de canal 31ₙ.

Le comparateur 311 reçoit à des premier et second ports d'entrée respectivement le numéro d'intervalle temporel NIa chargé dans le registre 313 et les numéros d'intervalles temporels NI délivrés par l'interface de ligne d'abonné 1 et convoyés par un bus interne du circuit 3. Le comparateur 311 a pour fonction de détecter les intervalles temporels IT de numéro NI=NIa dans les trames MIC, MX1, délivrées par l'interface 1 et de commander dans le registre de données 310 le chargement des mots TD transmis pendant ces intervalles temporels et correspondant au canal de données DTₙ. Pendant la phase d'établissement et synchronisation, les bits de synchronisation BS viennent dans l'étage de poids faible du registre de données 310 si c'est le canal d'ordre n qui est en cours de synchronisation.

L'introduction des bits BS au lieu et place des bits de données de poids faible est effectuée par la porte 312. Des ports de sortie de données des registres 310 des canaux 31₁ à 31_{N} sont connectés respectivement à N ports d'entrée du multiplexeur 5 (Fig. 3) afin de transmettre les mots TD dans les canaux de données DT₁ à DT_{N}.

Comme montré également à la Fig. 5, le circuit de transmission de bits de synchronisation 32 comprend essentiellement un démultiplexeur d'aiguillage 320 et un compteur 321. Le démultiplexeur 320 reçoit les bits BS fournis par le circuit de réception multicanaux 4 (Fig. 1). N sorties du démultiplexeur 320 sont reliées respectivement aux N circuits de canal 31₁ à 31_{N}. Le compteur 321 reçoit les impulsions de commutation CI fournies également par le circuit de réception multicanaux 4. Un mot de sélection de canal MS=n est délivré par le compteur 321 et est appliqué à un port de commande du démultiplexeur 320. Le mot MS=n sélectionne une sortie correspondante du démultiplexeur 320, et les bits BS sont transmis au circuit de canal 31ₙ.

Le multiplexeur 5 (Fig. 3) reçoit également des informations de signalisation correspondantes SG(IT16) fournies par le contrôleur de communication 2. Les informations SG(IT16) sont relatives aux N canaux DT₁ à DT_{N} et sont à inclure dans l'intervalle temporel IT16 de la voie multiplex sortante de la liaison LR. Ces canaux sont multiplexés dans le multiplexeur 5 octet par octet en une voie multiplex MX3 correspondant à la voie multiplex sortante de la liaison LR. La voie multiplex MX3 est reliée à un port d'entrée de l'interface de ligne du réseau 6. L'interface 6 est connectée au réseau à travers la liaison LR.

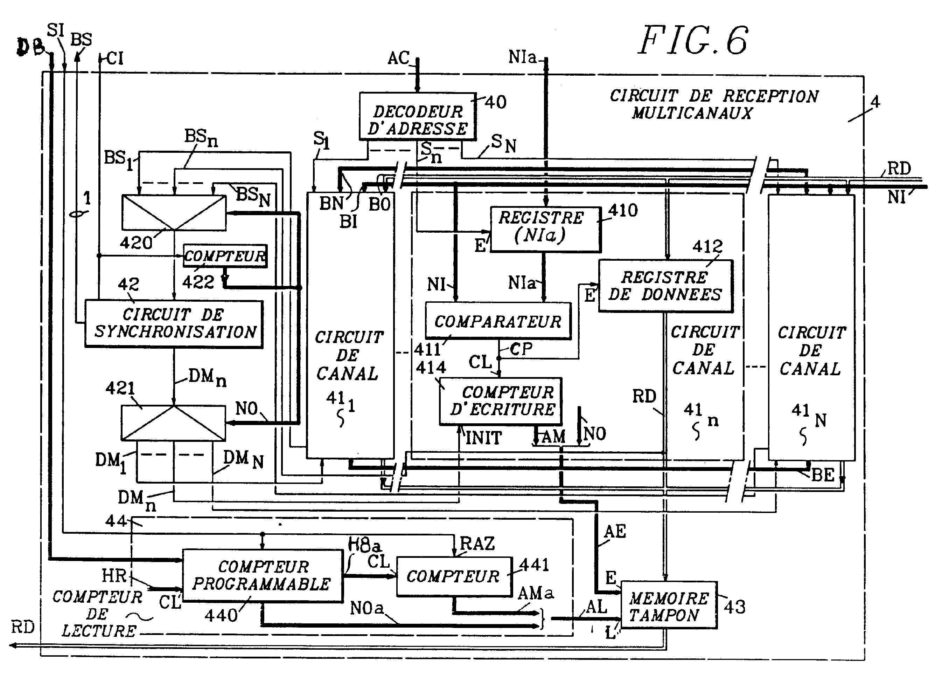

En référence à la Fig. 6, le circuit de réception multicanaux 4 comprend un décodeur d'adresses 40, N circuits de canal 41₁ à 41_{N}, un circuit de synchronisation 42, un multiplexeur d'aiguillage 420 et un démultiplexeur d'aiguillage 421 commandés par un compteur 422, une mémoire tampon 43, et un compteur de lecture 44.

Le décodeur d'adresse 40 comprend un port d'entrée recevant les adresses de sélection de canal AC délivrées par le contrôleur de communication 2 et N sorties S₁ à S_{N} connectées respectivement aux N circuits de canal 41₁ à 41_{N}.

Le circuit de canal 41ₙ est montré en détail à la Fig. 5 et comprend un registre de numéro d'intervalle temporel 410, un comparateur de mots 411, un registre de données 412, et un compteur d'écriture 414.

Le registre 410 a pour fonction de mémoriser le numéro d'intervalle temporel NIa de la voie multiplex MIC, MX1, affecté au circuit de canal 41ₙ par le contrôleur de communication 2. Un port d'entrée de données du registre 410 est relié à un bus interne BN du circuit de réception 4 convoyant les numéros NIa transmis par le contrôleur 2. Une entrée de commande d'écriture E du registre 410, est reliée à la sortie Sₙ du décodeur d'adresse 40. Lorsque le numéro NIa et une adresse correspondante AC=n sont transmis par le contrôleur 2,la sortie Sₙ du décodeur 40 délivre une impulsion à l'état actif "1" à l'entrée E du registre 410, et le numéro NIa est chargé consécutivement dans le registre 410 du circuit de canal 41ₙ.

Le comparateur 411 reçoit à des premier et second ports d'entrée respectivement un numéro d'intervalle temporel NIa attribué au circuit 41ₙ et les numéros d'intervalle temporel NI délivrés par l'interface de ligne du réseau 6 et convoyés par un bus interne BI du circuit 4. Le comparateur 411 a pour fonction de détecter les intervalles temporels IT de numéro NI=NIa dans les trames MIC délivrées par l'interface 6 et de commander le chargement dans le registre de données 412 des mots RD délivrés pendant ces intervalles temporels et correspondant au canal de données entrant DRₙ. Une sortie du comparateur 411 établit un signal CP à l'état actif "1" lorsque l'égalité NI=NIa est détectée. Le signal CP est appliqué à une entrée de commande d'écriture E du registre de données 412 et à une entrée d'horloge CL du compteur d'écriture 414.

Le registre de données 412 comprend un port d'entrée de données connecté à un bus interne BO convoyant les mots RD. Les mots RD inclus dans les intervalles temporels de numéro NI=NIa sont signalés par le comparateur CP et chargés dans le registre 412 qui les délivre au fur et à mesure à la mémoire tampon 43 via un port de sortie de données. Une sortie de poids faible du port de sortie du registre 412 délivre les bits de synchronisation BSₙ.

Les N circuits de canal 41₁ à 41_{N} délivrent séquentiellement respectivement des bits de synchronisation BS₁ à BS_{N} qui ont été retardés différemment par la transmission à travers le réseau de télécommunications. Les bits de synchronisation BS₁ à BS_{N} sont appliqués respectivement à N entrées du multiplexeur d'aiguillage 420. Une sortie du multiplexeur 420 est reliée à une entrée du circuit de synchronisation 42. Une sortie du circuit de synchronisation 42 est reliée à une entrée du démultiplexeur d'aiguillage 421. Le démultiplexeur 421 comprend N sorties connectées respectivement aux N circuits de canal 41₁ à 41_{N}. Des numéros d'ordre NO obtenus par comptage à partir du compteur 422 sont appliqués à des entrées de commande du multiplexeur 420 et du démultiplexeur 421. Les circuits de canal 41₁ à 41_{N} sont affectés dans l'ordre de remplissage ultérieur des données et dans l'ordre de synchronisation des canaux, et leurs bits de synchronisation BS₁ à BS_{N} sont tour à tour sélectionnés. Les bits BSₙ délivrés par le circuit de canal 41ₙ sont alors appliqués à l'entrée du circuit de synchronisation 42 qui en réponse fournit une impulsion de synchronisation correspondante DMₙ indiquant le début d'une multitrame MF. L'impulsion DMₙ est transmise à travers le démultiplexeur 421 vers le circuit de canal 41ₙ et est appliquée à une entrée d'initialisation de comptage INIT du compteur d'écriture 414. Après la réception de l'impulsion DMₙ, le circuit de canal 41ₙ est synchronisé et le compteur 422 est incrémenté afin de sélectionner le circuit de canal suivant 41ₙ₊₁ et à lui permettre d'être synchronisé. Pendant la phase d'établissement et synchronisation d'une communication de débit n.D, les circuits de canal 41₁ à 41ₙ sont sélectionnés et synchronisés successivement au fur et à mesure de la transmission des bits BS dans les canaux DT₁ à DTₙ. Le circuit de synchronisation 42 fournit ainsi successivement n impulsions de synchronisation DM₁ à DMₙ pour la synchronisation respectivement de circuits de canal 41₁ à 41ₙ. En même temps, le circuit 42 produit également les bits de synchronisation BS qui sont transmis au circuit de démultiplexage 3. Les canaux de transmission et les canaux de réception correspondants sont traités simultanément afin de pouvoir transmettre entre les équipements d'extrémité des informations de verrouillage de multitrame. La commutation d'un canal au canal suivant est commandée par l'impulsion CI un temps T₀ après la réception de l'information de synchronisation de multitrame transmise par l'équipement d'extrémité distant et après la transmission de ladite information vers l'équipement d'extrémité distant. La synchronisation relative entre les différents canaux requiert une absence totale de saut de phase dans la transmission des bits BS lors d'une commutation d'un canal au canal suivant.

Typiquement, selon l'invention, la durée nécessaire à la synchronisation d'un circuit de canal est de l'ordre de 320 ms.

Dans le circuit de canal 41ₙ, le compteur d'écriture 414 est un compteur binaire. Une entrée d'horloge CL du compteur 414 reçoit le signal CP fourni par le comparateur 411. Le signal CP commande l'incrémentation du contenu du compteur 414. Le compteur fournit une adresse de mot de canal AM.

Le numéro d'ordre NO=n est fixe pour un circuit 41ₙ. L'adresse AM et le numéro d'ordre NO délivrés respectivement par le compteur d'écriture 414 et par exemple par une mémoire câblée constituent respectivement un champ de poids fort et un champ de poids faible d'une adresse d'écriture AE appliquée à un port d'entrée d'adresse d'écriture E de la mémoire tampon 43 à travers un bus interne BE du circuit de réception 4.

Le compteur de lecture 44 comprend un compteur programmable 440 ayant Log₂N étages et un compteur 441 de capacité CM/N où CM est la capacité maximale en mot de 8 bits de la mémoire tampon 43.

Le compteur programmable 440 a essentiellement pour fonction de produire cycliquement des numéros d'ordre NOa=1 à n pendant la phase de transfert de données d'une communication de débit n.D. A cette fin, un signal d'horloge HR par exemple de fréquence égale à n.8 kHz est appliqué à une entrée d'horloge CL du compteur 440. Préalablement au transfert de données lors d'une communication de débit n.D, le compteur 440 est programmé pour un comptage de 1 à n en réponse au mot de débit DB=n et à l'impulsion SI fournis par le contrôleur 2. Le mot DB et l'impulsion SI sont appliqués respectivement à un port de programmation et une entrée de commande de programmation du compteur 440.

Le compteur programmable 440 a également pour fonction de produire à partir du signal d'horloge HR de fréquence n.8 kHz un signal d'horloge H8a de fréquence égale à 8 kHz obtenu en divisant la fréquence du signal HR par n. Le signal H8a est appliqué à une entrée d'horloge CL du compteur 441.

Le compteur 441 a pour fonction de produire une adresse de mot de canal AMa incrémentée à la fréquence 8 kHz du signal d'horloge H8a. Le compteur 441 est remis à zéro par l'impulsion SI appliquée à une entrée de remise à zéro RAZ.

L'adresse AMa et le numéro d'ordre NOa constituent respectivement un champ de poids fort et un champ de poids faible d'une adresse de lecture AL appliquée à un port d'entrée de lecture L de la mémoire tampon 43.

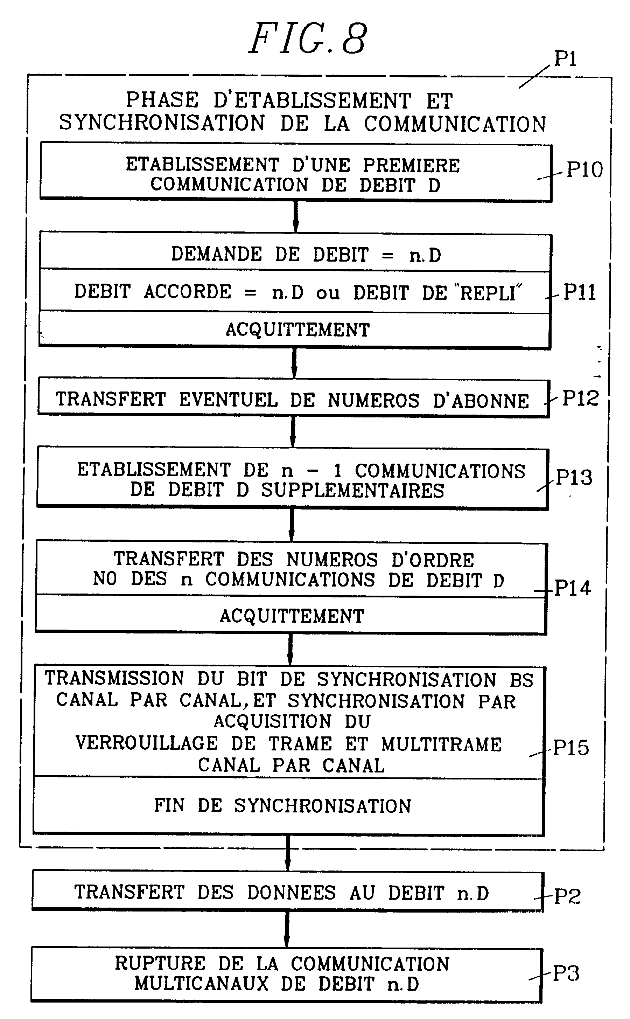

En référence à la Fig. 7, la mémoire tampon 43 est équivalente à N files tampon F₁ à F_{N} respectivement associées aux circuits de réception de canal 41₁ à 41_{N}, et sa capacité CM est de l'ordre de 16 Koctets pour N=12 et des variations de temps de transit de l'ordre de 80 ms.

L'écriture d'un mot de données entrant RD dans une des files F₁ à F_{N} est commandée par l'adresse d'écriture AE. Le numéro d'ordre NO=n inclus dans l'adresse d'écriture AE sélecte en écriture la file Fₙ correspondant au canal DRₙ ayant transmis le mot de données entrant RD. L'adresse de mot de canal AM adresse une cellule de mémoire vide de la file sélectée Fₙ disponible pour charger le mot de données entrant RD.

La lecture de mots de données sortants RD dans les files F₁ à F_{N} est effectuée cycliquement sous la commande de l'adresse de lecture AL. La lecture des mots de données est décalée de quelques mots par rapport à l'écriture dans la file tampon correspondant au temps de mémorisation le plus court. Le numéro d'ordre NOa de l'adresse AL est incrémenté au rythme du signal HR et sélecte en lecture cycliquement chacune des n files F₁ à Fₙ correspondant aux n canaux de réception DR₁ à DRₙ activés pour une communication de débit D.n. L'adresse de mot de canal AMa adresse dans la file sélectée en lecture par le numéro d'ordre NOa, une cellule de mémoire contenant un mot de donnée RD à lire. Les mots de données sortants RD sont transmis au circuit de multiplexage 7, puis à l'interface 1 après mise en forme et introduction des informations de signalisation SG(IT16).

En référence à la Fig. 8, une connexion entre l'équipement d'extrémité EE selon l'invention et le réseau de télécommunications pour une communication de débit n.D se divise en trois phases : une phase d'établissement et synchronisation de la communication P1, une phase de transfert de données P2, et une phase de rupture de la communication P3.

La phase d'établissement et synchronisation de la communication P1 est détaillée à la Fig. 8 ; la phase P1 se subdivise en plusieurs sous-phases successives P10 à P15.

Pendant la première sous-phase P10, un premier numéro d'abonné est transmis par l'équipement EE par exemple à travers un canal de signalisation afin d'établir une première communication de débit D à travers les canaux DT₁ et DR₁.

Cette première communication étant établie, se déroule ensuite la sous-phase P11 qui est une phase de négociation de débit pendant laquelle est convenu le débit auquel seront transmises les données lors de la phase P2. Un premier mot d'information de débit DB=n et une information indiquant l'acceptation éventuelle d'un débit de repli sont transmis de préférence à travers un canal de signalisation d'usager à usager associé au canal DT₁. Dans le cas où le nombre de canaux libres nécessaires pour transmettre le débit n.D est effectivement disponible, un second mot d'information de débit DB=n identique au premier mot d'information de débit est transmis en retour à l'équipement EE. Dans le cas contraire, le second mot d'information de débit DB indique un débit de repli disponible. Le débit de repli est accepté ou refusé par l'équipement EE ; dans le cas d'un refus, l'établissement de la communication multicanaux est impossible et l'équipement EE rompt la communication. Il est supposé que le débit n.D est effectivement disponible. L'équipement EE reçoit alors un second mot d'information de débit DB=n mettant fin à la sous-phase P11.

Les échanges de mots d'information de débit et d'acquittement pendant la sous-phase P11 sont suivis par le contrôleur de communication 2 de l'équipement EE et le contrôleur 2 est ainsi informé du nombre de communications de débit D qu'il est nécessaire d'établir.

Afin de permettre à l'équipement EE d'établir n-1 communications de débit D supplémentaires, le réseau communique éventuellement n-1 numéros d'abonné supplémentaires à l'équipement demandeur EE pendant la sous-phase P12.

Pendant la sous-phase P13, le contrôleur 2 de l'équipement demandeur EE active n-1 canaux supplémentaires DT₂ à DTₙ convoyant les n-1 numéros d'abonné supplémentaires vers l'équipement demandé afin d'établir les n-1 communications de débit D supplémentaires.

Pendant la sous-phase P14, le contrôleur 2 de l'équipement EE du côté demandeur transmet n numéros d'ordre NO=1 à n des canaux DT₁ à DTₙ de préférence à travers des canaux de signalisation d'usager à usager. Les numéros d'intervalles temporels sont appliqués aux n circuits de canal 41₁ à 41ₙ du circuit de réception multicanaux 4 de l'équipement EE.

L'établissement de la synchronisation de trame et multitrame dans les deux sens de communication et pour chacun des canaux est effectué pendant la dernière sous-phase P15. Le contrôleur 2 de l'équipement EE transmet les bits de synchronisation BS successivement dans les canaux DT₁ à DTₙ et la synchronisation est effectuée canal par canal dans le circuit de réception multicanaux 4. Lorsque la synchronisation est faite pour tous les canaux, l'équipement EE est prêt pour la phase de transfert de données P2.

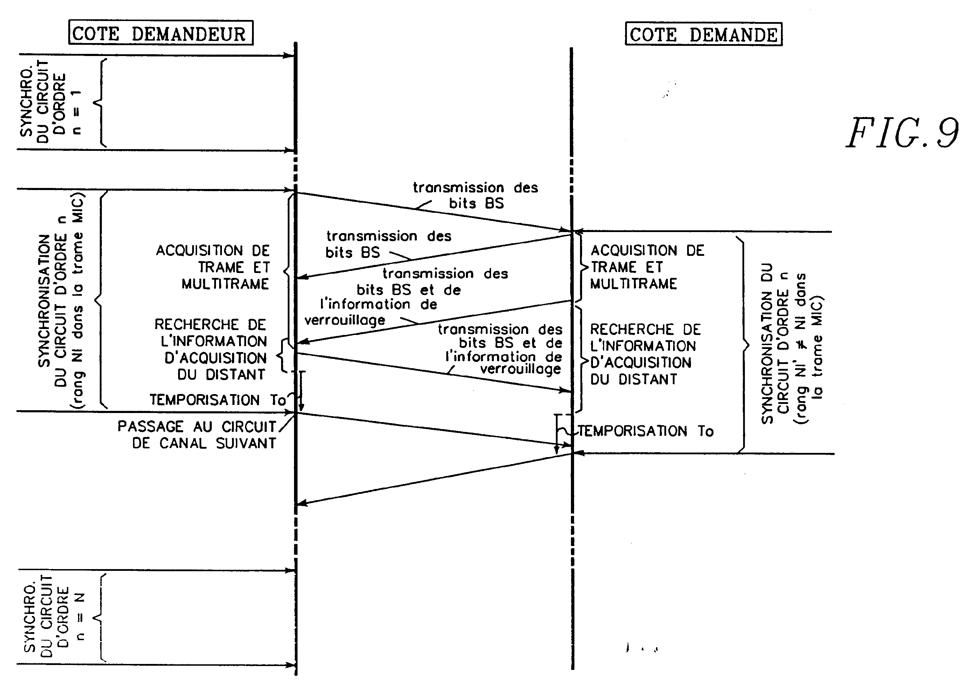

A la Fig. 9, les échanges d'informations intervenant entre un équipement d'extrémité de demandeur et un équipement d'extrémité de demandé pendant la sous-phase de synchronisation P15 sont montrés sous la forme d'un diagramme.

## Revendications

1. Procédé pour établir une liaison de télécommunications de débit élevé (n.D) entre une extrémité de transmission et une extrémité de réception par association d'un nombre prédéterminé n de canaux indépendants (DT₁ à DT_{N}, DR₁ à DR_{N}) d'un réseau de télécommunications à commutation temporelle synchrone,
dans l'extrémité de transmission, des trames de synchronisation (BS, MF) étant transmises dans chacun des canaux (DT₁ à DT_{N}, DR₁ à DR_{N}) uniquement pendant une phase d'établissement et synchronisation de la liaison de débit élevé (P1) antérieurement à une phase de transfert de données (F2) et dans l'extrémité de réception, les trames (BS, MF) étant détectées afin de commander la synchronisation de moyens de réception de canaux (4) et de compenser des disparités de temps de transit dans les canaux (DT₁ à DT_{N}, DR₁ à DR_{N}), pendant ladite phase de transfert de données (P2), la liaison de débit élevé ayant un débit égal à n.D, où D est un débit strictement égal à un débit de base que peut écouler chacun des canaux (DT₁ à DT_{N}, DR₁ à DR_{N})
caractérisé en ce que,
dans l'extrémité de réception, les trames de synchronisation (BS, MF) sont détectées séquentiellement et la synchronisation est effectuée canal par canal.

2. Procédé conforme à la revendication 1, caractérisé en ce que pendant ladite phase d'établissement et synchronisation (P1) une première liaison de télécommunications de débit D est établie entre l'extrémité de transmission et l'extrémité de réception et des informations sont échangées entre lesdites extrémités afin de convenir du débit n.D de la liaison de débit élevé à établir et consécutivement du nombre de liaisons supplémentaires n-1 à établir, et éventuellement afin de fournir des numéros d'abonné de l'extrémité de réception à l'extrémité de transmission via le réseau, afin d'établir les n-1 liaisons supplémentaires.

3. Procédé conforme à la revendication 1 ou 2, caractérisé en ce que
pendant ladite phase d'établissement et synchronisation (P1), les trames de synchronisation (BS, MF) sont échangées séquentiellement, et
entre la synchronisation d'un canal et la synchronisation du canal suivant intervient un temps prédéterminé fixe (T₀) après la réception par l'extrémité concernée d'une information d'acquisition de synchronisation transmise par l'autre extrémité et après la transmission de ladite information également par l'extrémité concernée,
un ordre de synchronisation entre les canaux ayant été précédemment établi de manière à permettre un dialogue entre les extrémités à travers un même canal bidirectionnel.

4. Equipement d'extrémité pour la mise en oeuvre du procédé conforme à l'une quelconque des revendications 1 à 3 comprenant des moyens de transmission (3, 5), des moyens de réception (4, 7) et des moyens de commande (2), lesdits moyens de reception (4, 7) comprennent N circuits de canal (41₁ à 41_{N}) pour recevoir respectivement N canaux (DR₁ à DR_{N}), où N est une valeur maximale du nombre n, une mémoire tampon (43) contenant N files tampon (F₁ à F_{N}) associées respectivement aux N circuits de canal (41₁ à 41_{N}), et des moyens d'adressage de lecture (44) activés pendant la phase de transfert de données (P2) pour adresser séquentiellement en lecture les files tampon (F₁ à F_{N}), caractérisé en ce qu'il comprend des moyens de synchronisation (42, 420, 421, 422) activés pendant une phase d'établissement et synchronisation (P1) d'une liaison de débit élevé antérieurement à la phase de transfert de données (P2) pour recevoir séquentiellement les trames de synchronisation (BS, MF), détecter des débuts de trame et synchroniser successivement les circuits de canal (41₁ à 41_{N}).

5. Equipement conforme à la revendication 4, caractérisé en ce que les moyens de synchronisation comprennent des moyens (420, 421, 422) reliés à chacun des circuits de canal (41₁ à 41_{N}) pour sélectionner séquentiellement, canal par canal, les trames de synchronisation (BS, MF) à traiter, et un circuit de synchronisation (42) recevant les trames de synchronisation sélectées (BS, MF) pour détecter les débuts de trame de manière à produire pendant la phase d'établissement et synchronisation (P1) au moins une impulsion de synchronisation (DMₙ) par circuit de canal (41ₙ) impliqué dans la liaison de débit élevé (n.D), ledit circuit de synchronisation (42) fournissant également les trames de synchronisation (BS) à introduire séquentiellement dans différents circuits de canal (31ₙ) inclus dans les moyens de transmission (3) ainsi qu'une impulsion (CI) indiquant la fin du traitement de synchronisation pour un circuit afin de commander le passage dudit traitement de synchronisation à un circuit suivant.

6. Equipement conforme à la revendication 4 ou 5, caractérisé en ce qu'un circuit de canal (41ₙ) comprend des moyens (411) pour détecter des mots numériques (RD) délivrés par le canal correspondant (DRₙ), un registre (412) pour stocker temporairement chacun des mots numériques détectés (RD), et des moyens de comptage (414) initialisés pendant la phase d'établissement de synchronisation (P1) par les moyens de synchronisation (42) en réponse à un début de trame de synchronisation (DMₙ) pour produire une adresse d'écriture (AE) destinée à la file correspondante (Fₙ) dans la mémoire tampon (43), ladite adresse (AE) étant incrémentée au fur et à mesure de la réception des mots numériques (RD) délivrés par ledit canal (DRₙ).

## Patentansprüche

1. Verfahren zur Herstellung einer Verbindung für Nachrichtenübermittlungen mit hohem Durchsatz (n.D) zwischen einem übertragungsende und einem Empfangsende durch Verknüpfung einer vorbestimmten Zahl n von unabhängigen Kanälen (DT₁ bis DT_{N}, DR₁ bis DR_{N}) eines Übermittlungsnetzes mit synchroner Zeitumschaltung,
- wobei im Übertragungsende Synchronisationsraster (BS, MF) in jedem der Kanäle (DT₁ bis DT_{N}, DR₁ bis DR_{N}) allein während einer Herstell- und Synchronisationsphase der Verbindung mit hohem Durchsatz (P1) vor einer Datenübertragungsphase (P2) übertragen werden und im Empfangsende die Raster (BS, MF) erfaßt werden, um die Synchronisation von Kanalempfangsmitteln (4) zu steuern und Durchgangszeitdisparitäten in den Kanälen (DT₁ bis DT_{N}, DR₁ bis DR_{N}) während der Datenübertragungsphase (P2) zu kompensieren, wobei die Verbindung mit hohem Durchsatz einen Durchsatz gleich n.D hat, wobei D ein Durchsatz genau gleich einem Basisdurchsatz ist, der durch jeden der Kanäle (DT₁ bis DT_{N}, DR₁ bis DR_{N}) laufen kann,
dadurch **gekennzeichnet**, daß
- die Synchronisationsraster (BS, MF) im Empfangsende sequentiell erfaßt werden und die Synchronisation kanalweise ausgeführt wird.

2. Verfahren nach Anspruch 1, dadurch **gekenn****zeichnet**, daß eine erste Nachrichtenübermittlungsverbindung mit Durchsatz D während der Herstell- und Synchronisationsphase (P1) zwischen dem Übertragungsende und dem Empfangsende hergestellt wird und Informationen zwischen den Enden ausgetauscht werden, damit der Durchsatz n.D der herzustellenden Verbindung mit hohem Durchsatz und nacheinander die Zahl der herzustellenden zusätzlichen Verbindungen n-1 paßt und ggf. damit Teilnehmernummern vom Empfangsende über das Netz zum Übertragungsende geliefert werden, um die n-1 zusätzlichen Verbindungen herzustellen.

3. Verfahren nach Anspruch 1 oder 2, dadurch **ge****kennzeichnet**, daß
- die Synchronisationsraster (BS, MF) während der Herstell- und Synchronisationsphase (P1) sequentiell ausgetauscht werden und
- zwischen der Synchronisation eines Kanals und der Synchronisation des folgenden Kanals eine vorbestimmte Zeit (T₀) nach dem Empfang einer durch das andere Ende übertragenen Synchronisationserwerbsinformation durch das betreffende Ende und nach der Übertragung der Information ebenso durch das betreffende Ende eintritt,
- wobei eine Synchronisationsfolge zwischen den Kanälen zuvor eingerichtet worden ist, derart, daß über einen selben bidirektionalen Kanal ein Dialog zwischen den Enden gestattet wird.

4. Endeinrichtung für die Ausführung eines Verfahrens nach einem beliebigen der Ansprüche 1 bis 3, aufweisend Übertragungsmittel (3, 5), Empfangsmittel (4, 7) und Steuermittel (2), wobei die Empfangsmittel (4, 7) N Kanalkreise (41₁ bis 41_{N}) umfassen, um jeweils N Kanäle (DR₁ bis DR_{N}) zu empfangen, wobei N ein Maximalwert der Zahl n ist, einen Pufferspeicher (43), der jeweils den N Kanalkreisen (41₁ bis 41_{N}) zugeordnete N Pufferwarteschlangen (F₁ bis F_{N}) aufweist, und Leseadressierungsmittel (44), die während der Datenübertragungsphase (P2) aktiviert sind, um beim Lesen die Pufferwarteschlagen (F₁ bis F_{N}) sequentiell zu adressieren, dadurch **gekennzeichnet**, daß die Synchronisationsmittel (42, 420, 421, 422) aufweist, die während einer Herstell- und Synchronisationsphase (P1) einer Verbindung mit hohem Durchsatz vor der Datenübertragungsphase (P2) aktiviert sind, um sequentiell Synchronisationsraster (BS, MF) zu empfangen, Rasteranfänge zu erfassen und aufeinanderfolgend die Kanalkreise (41₁ bis 41_{N}) zu synchronisieren.

5. Einrichtung nach Anspruch 4, dadurch **gekennzeichnet**, daß die Synchronisationsmittel (420, 421, 422), die jeweils mit Kanalkreisen (41₁ bis 41_{N}) verbunden sind, um kanalweise sequentiell die zu verarbeitenden Synchronisationsraster (BS, MF) auszuwählen und einen Synchronisationskreis (42) aufweisen, der die ausgewählten Synchronisationsraster (BS, MF) empfängt, um die Rahmenanfänge zu erfassen, derart, daß während der Herstell- und Synchronisationsphase (P1) wenigstens ein Synchronisationsimpuls (DMₙ) je Kanalkreis (41ₙ) erzeugt wird, eingeschlossen in der Verbindung mit hohem Durchsatz (n.D), wobei der Synchronisationskreis (42) ebenfalls sequentiell in den Übertragungsmitteln (3) enthaltene, in verschiedene Kanalkreise (31ₙ) einzuführende Synchronisationsraster (BS! sowie einen Impuls (CI) liefert, der das Ende der Synchronisationsverarbeitung für einen Kreis anzeigt, um das Durchlaufen der Synchronisationsverarbeitung zu einem folgenden Kreis zu steuern.

6. Einrichtung nach Anspruch 4 oder 5, dadurch **gekennzeichnet**, daß ein Kanalkreis (41ₙ) Mittel (411) zum Erfassen der durch den entsprechenden Kanal (DRₙ) ausgegebenen digitalen Wörter (RD), ein Register (412) zum vorübergehenden Speichern jedes der erfaßten digitalen Wörter (RD) und Zählmittel (414) aufweist, die während der Synchronisationsherstellphase (P1) durch die Synchronisationsmittel (42) in Reaktion auf einen Synchronisationsrasteranfang (DMₙ) initialisiert werden, um eine für die entsprechende Warteschlange (Fₙ) im Pufferspeicher (43) bestimmte Schreibadresse (AE) zu erzeugen, wobei die Adresse (AE) nach Maßgabe des Empfangs der durch den Kanal (DRₙ) ausgegebenen digitalen Wörter (RD) inkrementiert wird.

## Claims

1. Method for setting-up a high-rate (n.D.) telecommunications link between a transmission end and a reception end by association of a predetermined number n of independent channels (DT₁ to DT_{N}, DR₁ to DR_{N}) in a synchronous time-division switching telecommunications network,
in the transmission end, synchronization frames (BS, MF) being transmitted in each of the channels (DT₁ to DT_{N}, DR₁ to DR_{N}) only during a setting-up and synchronization phase of the high-rate link (P1) prior to a data transfer phase (P2) and, in the reception end, the frames (BS,MF) being detected thereby controlling the synchronization of channel receiving means (4) and compensating disparities in routing times in the channels (DT₁ to DT_{N}, DR₁ to DR_{N}),
during said data transfer phase (P2), the high-rate link having a rate equal to n.D, whereby D is a rate strictly equal to a basic rate of which each channel (DT₁ to DT_{N}, DR₁ to DR_{N}) disposes, characterized in that in the reception end, the synchronization frames (BS,MF) are sequentially detected and the synchronization is carried out channel by channel.

2. Method according to claim 1, characterized in that during said setting-up and synchronization phase (P1), a first telecommunications link of rate D is set-up between the transmission end and the reception end, and informations are exchanged between said ends so as to agree to the rate n.D of the high-rate link to be set-up and consecutively of the number of the additional links n-1 to be set-up, and if necessary to supply subscriber numbers from reception end to the transmission end via the network, thereby setting-up n-1 additional links.

3. Method according to claim 1 or 2, characterized in that during said setting-up and synchronization phase (P1), the synchronization frames (BS, MF) are sequentially exchanged, and
between the synchronization of a channel and the synchronization of the next channel takes place a set predetermined time (T₀) after the reception by the corresponding end of a synchronization acknowledgement information transmitted by the other end and after the transmission of said information also by the corresponding end,
a synchronization order between the channels having been previously derived so as to enable a dialog between the ends via a same bidirectional channel.

4. End equipment for carrying out the method according to any one of claims 1 to 3 comprising transmitting means (3,5), receiving means (4,7) and controlling means (2), said receiving means (4,7) comprising N channel circuits (41₁ to 41_{N}) for receiving respectively N channels (DR₁ to DR_{N}), whereby N is a maximal value of the number n, a buffer memory (43) containing N buffer queues (F₁ to F_{N}) associated respectively with the N channel circuits (41₁ to 41_{N}), and reading addressing means (44) activated during the data transfer phase (P2) for addressing sequentially in reading the buffer queues (F₁ to F_{N}), characterized in that it comprises synchronizing means (42, 420, 421, 422) activated during a setting-up and synchronization phase (P1) of a high-rate link prior to the data transfer phase (P2) to receive sequentially the synchronization frames (BS,MF), to detect the frame starts and to synchronize successively the channel circuits (41₁ to 41_{N}).

5. Equipment according to claim 4, characterized in that the synchronizing means comprise means (420, 421, 422) connected to each of the channel circuits (41₁ to 41_{N}) for selecting sequentially, channel by channel, the synchronization frames (BS,MF) to be processed, and a synchronizing circuit (42) receiving the selected synchronization frames (BS,MF) for detecting the frame starts thereby producing during said setting-up and synchronization phase (P1) at least one synchronization pulse (DMₙ) per channel circuit (41ₙ) involved in the high-rate link (n.D), said synchronizing circuit (42) also supplying the synchronization frames (BS) to be inserted sequentially in different channel circuits (31ₙ) included in the transmitting means (3) as well as a pulse (CI) indicating the end of the synchronization processing for a circuit so as to control the synchronization processing to a next circuit.

6. Equipment according to claims 4 or 5, characterized in that a channel circuit (41ₙ) comprises means (411) for detecting digital words (RD) delivered by the corresponding channel (DRₙ), a register (412) for temporarily storing each of the detected digital words (RD), and counting means (414) reset during the setting-up and synchronization phase (P1) by the synchronizing means (42) responsive to a start of synchronization frame (DMₙ) for deriving a write address (AE) intended to the corresponding queue (Fₙ) in the buffer memory (43), said address (AE) being incremented as the reception of the digital words (RD) delivered by said channel (DRₙ).
